# FASCICULE DE BREVET EUROPEEN

(11) **EP 1 701 836 B1**
(45) Date de publication et mention de la délivrance du brevet: **07.05.2014**
(21) Numéro de dépôt: 04816443.8
(22) Date de dépôt: 20.12.2004
(51) Int. Cl.: B29C 70/50, B29C 70/46, B29B 15/10, C08J 5/04

(54) **MATERIAUX COMPOSITES COMPRENANT UN MATERIAU DE RENFORT ET UNE MATRICE THERMOPLASTIQUE, ARTICLE COMPOSE PRECURSEUR DE CES MATERIAUX ET PRODUITS OBTENUS A PARTIR DE CES MATERIAUX.**
EIN VERSTÄRKUNGSMATERIAL UND EINE THERMOPLASTISCHE MATRIX UMFASSENDE VERBUNDMATERIALIEN, VORLÄUFERVERBINDUNGSARTIKEL DER MATERIALIEN UND UNTER VERWENDUNG DIESER ERHALTENE PRODUKTE
COMPOSITE MATERIALS COMPRISING A REINFORCING MATERIAL AND A THERMOPLASTIC MATRIX, PRECURSOR COMPOUND ARTICLE OF SAID MATERIALS AND PRODUCTS OBTAINED USING SAME

(30) Priorité: 19.12.2003 FR 0314994
(43) Date de publication de la demande: 20.09.2006
(73) Titulaire: Rhodia Opérations, 93306 Aubervilliers (FR)
(72) Inventeur: BOUQUEREL, Franck, F-69003 Lyon (FR); PHILIPPON, Frédéric, F-69130 Ecully (FR)
(74) Mandataire: Benvenuti, Federica
(86) Numéro de dépôt international: PCT/FR2004/003310
(87) Numéro de publication internationale: WO 2005/061209

(56) Documents cités:
- EP-A- 0 216 109
- EP-A- 0 743 165
- WO-A-93/25736
- WO-A-02/062563
- WO-A-03/029350
- FR-A- 2 158 422
- FR-A- 2 603 891

## Description

Le domaine de l'invention est celui des matériaux composites et de leurs procédés de fabrication.

De façon plus précise, l'invention se rapporte à l'utilisation de certains polycondensats servant à l'imprégnation de matériaux de renfort, notamment sous la forme de fils et/ou de fibres, destinés à jouer le rôle de matrice thermoplastique, dans des matériaux composites.

Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires.

Par fibre, on entend un filament ou un ensemble de filaments coupés, craqués ou convertis.

Dans le domaine des matériaux haute-performances, les composites ont pris une place prépondérante, de par leurs performances et les gains de poids qu'ils autorisent. Les composites hautes performances les plus connus à ce jour, sont obtenus à partir de résines thermodurcissables, dont l'utilisation est limitée aux applications de faibles séries, principalement dans l'aéronautique, le sport automobile, et dans les meilleurs cas, présentant des temps de fabrication voisins d'une quinzaine de minutes, comme par exemple, lors de la fabrication de skis. Le coût de ces matériaux, et/ou les temps de fabrication, les rendent incompatibles avec un usage en grande série.

Une réponse, en regard des temps de fabrication, est donnée par les composites à matrice thermoplastique. Les résines thermoplastiques sont en général connues pour leur viscosité élevée, ce qui constitue un frein en ce qui concerne l'imprégnation des matériaux de renfort, composés en général de faisceaux de filaments très denses. Il résulte de l'emploi des matrices thermoplastiques disponibles sur le marché, notamment des matrices polyamide, une difficulté d'imprégnation imposant soit des temps d'imprégnation prolongés, soit des pressions de mise en oeuvre importantes. Dans la majeure partie des cas, les matériaux composites obtenus à partir de ces matrices peuvent présenter des microvides et des zones non imprégnées. Ces microvides causent des chutes de propriétés mécaniques, un vieillissement prématuré du matériau ainsi que des problèmes de délaminage lorsque le matériau est stratifié.

Pour améliorer l'imprégnation des fils de renfort par la matrice et l'adhésion entre les fils de renfort et la matrice, plusieurs voies ont été explorées.

La première de ces voies a consisté à utiliser des polyamides linéaires à poids moléculaire abaissé, comme matrice.

Ainsi, le document FR-2 158 422 décrit une feuille composite constituée d'une matrice polyamide et de fibres de renfort de type fibres de verre. Le polyamide est obtenu par polycondensation d's-caprolactame, dont le poids moléculaire est compris entre 3000 et 25000 g/mol, ayant la capacité, grâce à sa faible viscosité, d'imprégner convenablement les fibres de renfort et ainsi de limiter l'apparition de microvides, dans le produit fini. Ce document décrit également un procédé de formage de cette feuille composite.

De façon générale, l'utilisation de polyamides de poids moléculaires faibles dans la matrice présente comme inconvénient majeur d'altérer les propriétés mécaniques du composite, notamment en ce qui concerne la résistance à la rupture, la résistance à l'allongement et le comportement en fatigue. En effet, lors de la mise en oeuvre de composites hautes performances, renforcés de fibres longues, les propriétés mécaniques de ces composites sont fonction de la plasticité de la matrice, qui transmet les contraintes au niveau du renfort, et des propriétés mécaniques de celle-ci.

Une autre voie permettant d'améliorer l'imprégnation des fibres de renforts par la matrice, consiste à employer une matrice se présentant sous la forme d'un oligomère ou d'un prépolymère de bas poids moléculaire, polymérisable par polycondensation, in situ.

Ainsi, le document FR-A-2 603 891 concerne un procédé de fabrication d'un matériau composite, constitué d'une matrice en polyamide renforcée par des fibres de renfort longues. Ces fibres sont imprégnées d'un prépolymère ou d'un oligomère de polyamide qui comporte à chaque extrémité de la chaîne moléculaire une fonction réactive susceptible de réagir avec une autre molécule d'oligomère ou de prépolymère sous l'effet d'un chauffage, entraînant l'allongement de la chaîne polymérique, pour obtenir un polyamide de poids moléculaire élevé. L'oligomère ou le prépolymère, de faible masse moléculaire, a comme caractéristique d'être fluide à l'état fondu. Les polyamides utilisés sont préférentiellement des polyamides 6, 6.6, 6.10, 6.12, 11 et 12. Les fibres imprégnées sont ensuite pultrudées à travers une filière conformatrice, à température élevée, afin de former des profilés.

Ce procédé reste voisin des procédés classiques de polymérisation, donc présente des temps de cycle incompatibles avec une cadence de production rapide. Si l'on adapte les temps de cycle de façon à les rendre compatibles avec la grande série, le poids moléculaire du polyamide obtenu et constituant la matrice est trop faible pour conférer à cette dernière un bon niveau de propriétés mécaniques.

Le document EP-B-0 133 825 décrit un matériau composite souple principalement constitué d'un matériau de renfort sous forme d'une mèche de fibres continues parallèles, imprégnées de poudre thermoplastique, préférentiellement de la poudre de polyamide, et d'une matrice thermoplastique sous forme de gaine autour de la mèche de fibres continues, cette gaine pouvant être également en polyamide. Ce matériau se caractérise par le fait que le polymère constituant la matrice thermoplastique possède un point de fusion inférieur ou égal à celui du polymère constituant la poudre thermoplastique, de telle sorte que le gainage des fibres recouvertes de poudre est réalisé par fusion de la matrice thermoplastique, mais sans fusion de la poudre, de telle sorte que cette dernière isole les fibres de la gaine.

Un inconvénient de l'utilisation d'un polymère thermoplastique sous forme de poudre est la nécessité d'utiliser un appareillage complexe qui limite la quantité de composite obtenue. Il apparaît donc clairement que ce procédé est peu compatible avec une production de grande série.

Le document US-B-5 464 684 décrit un fil hybride comprenant un coeur de mélange intime de filaments de renfort et de filaments de polyamide de basse viscosité, formant la matrice. Ce noyau est recouvert par un fil continu de polyamide, préférentiellement du même type que celui utilisé pour le noyau. Le polyamide utilisé est du type nylon 6 ou nylon 6.6, mais peut également être constitué par le nylon 6.6 T, le nylon 6.10, le nylon 10 ou un polyamide d'acide adipique et de 1,3-xylylènediamine. Les fibres de renfort sont des fibres de carbone ou des fibres de verre.

La technique utilisée pour fabriquer un tel fil hybride est certes adaptée à des applications de petites séries, telles que la fabrication de raquettes de tennis. Toutefois, il est difficile de concevoir l'utilisation d'une telle méthode à plus grande échelle.

Le document WO 03/029350 décrit l'utilisation d'un polyamide étoile comme matrice, un tel polyamide présentant une bonne fluidité à l'état fondu, ce qui permet une bonne imprégnation des matériaux de renfort.

L'objectif de la présente invention est donc de remédier aux inconvénients décrits ci-dessus en proposant un article précurseur d'un matériau composite, comprenant des types différents de fils et/ou de fibres, et notamment au moins un fil et/ou des fibres de renfort, et au moins un fil et/ou des fibres générateur d'une matrice thermoplastique présentant une haute fluidité à l'état fondu, permettant une très bonne imprégnation des fils et/ou des fibres de renfort, lors de la formation du matériau composite. Un tel article permet d'obtenir un matériau composite par une technique simple et rapide de thermocompression.

Un autre objectif de l'invention est de proposer un matériau composite, obtenu à partir de cet article et présentant de bonnes propriétés mécaniques.

Enfin, un dernier objectif de l'invention est de fournir un matériau composite présentant un avantage de réduction de coûts de fabrication, par l'emploi d'un outillage mettant en oeuvre des basses pressions et des temps de cycle raccourcis.

A cette fin, l'invention concerne un article précurseur d'un matériau composite comprenant une matrice polymérique et au moins un fil et/ou des fibres de renfort, ledit article comprenant au moins un fil et/ou des fibres de renfort et au moins un fil et/ou des fibres de matrice polymérique caractérisé en ce que :
- ledit fil et/ou lesdites fibres de renfort sont en matériau de renfort et comprennent éventuellement une partie en polymère thermoplastique
- ledit fil et/ou lesdites fibres de matrice polymérique sont en polymère thermoplastique, et en ce que,
- ledit polymère thermoplastique dudit fil et/ou desdites fibres de renfort et/ou dudit fil et/ou desdites fibres de matrice polymérique comprend au moins un polycondensat constitué de :
   - 30 à 100% molaire (bornes comprises) de chaînes macromoléculaires répondant à la formule (I) suivante :

      R₃-(X-R₂-Y)ₙ-X-A-R₁-A-X-(Y-R₂-X)ₘ-R₃ (I)
   - 0 à 70% molaire (bornes comprises) de chaînes macromoléculaires répondant à la formule (II) suivante

      R₄-[Y-R₂-X]ₚ-R₃ (II)
   dans lesquelles
- X-Y- est un radical issu de la condensation de deux fonctions réactives F₁ et F₂ telles que
- F₁ est le précurseur du radical -X- et F₂ le précurseur du radical -Y- ou inversement,
- les fonctions F₁ ne peuvent réagir entre elles par condensation
- les fonctions F₂ ne peuvent réagir entre elles par condensation
- A est une liaison covalente ou un radical hydrocarboné aliphatique pouvant comprendre des hétéroatomes et comprenant de 1 à 20 atomes de carbone.
- R₂ est un radical hydrocarboné aliphatique ou aromatique ramifié ou non comprenant de 2 à 20 atomes de carbone.
- R₃, R₄ représente l'hydrogène, un radical hydroxyle ou un radical hydrocarboné
- R₁ est un radical hydrocarboné comprenant au moins 2 atomes de carbone, linéaire ou cyclique, aromatique ou aliphatique et pouvant comprendre des hétéroatomes.
- -n, m et p représentent chacun un nombre compris entre 30 et 200

Toutes les fonctions de polycondensation connues peuvent être utilisées dans le cadre de l'invention pour F₁ et F₂.

Dans le polycondensat, les radicaux R₂ peuvent être de nature identique ou différente entre eux.

Selon un mode de réalisation particulier de l'invention ;la matrice polymérique est un polyamide A1 constitué de :
- 30 à 100% molaire (bornes comprises) de chaînes macromoléculaires répondant à la formule (I) suivante :

   R₃-(X-R₂-Y)ₙ-X-A-R₁-A-X-(Y-R₂-X)ₘ-R₃ (I)
- 0 à 70% molaire (bornes comprises) de chaînes macromoléculaires répondant à la formule (II) suivante

   R₄-[Y-R₂-X]ₚ-R₃ (II)

   dans lesquelles :
   - Y est le radical 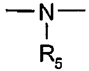 quand X représente le radical 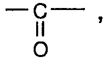
   - Y est le radical 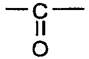 quand X représente le radical 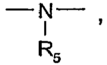
   - A est une liaison covalente ou un radical hydrocarboné aliphatique pouvant comprendre des hétéroatomes et comprenant de 1 à 20 atomes de carbone.
   - R₂ est un radical hydrocarboné aliphatique ou aromatique ramifié ou non comprenant de 2 à 20 atomes de carbone.
   - R₃, R₄ représente l'hydrogène, un radical hydroxyle ou un radical hydrocarboné comprenant un groupement 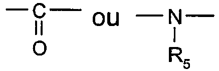
   - R₅ représente l'hydrogène ou un radical hydrocarboné comprenant de 1 à 6 atomes de carbone
   - R₁ est un radical hydrocarboné comprenant au moins 2 atomes de carbone, linéaire ou cyclique, aromatique ou aliphatique et pouvant comprendre des hétéroatomes.
   - n, m et p représentent chacun un nombre compris entre 30 et 200

Selon un autre mode de réalisation particulier de l'invention, la matrice polymérique de l'invention consiste en un polyester A2 constitué de :
- 30 à 100% molaire (bornes comprises) de chaînes macromoléculaires répondant à la formule (I) suivante :

   R₃-(X-R₂-Y)ₙ-X-A-R₁-A-X-(Y-R₂-X)ₘ-R₃ (I)
- 0 à 70% molaire (bornes comprises) de chaînes macromoléculaires répondant à la formule (II) suivante

   R₄-[Y-R₂-X]ₚ-R₃ (II)

   dans lesquelles :
   - Y est le radical 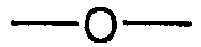 quand X représente le radical 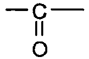
   - Y est le radical 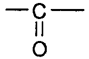 quand X représente le radical 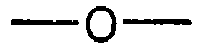
   - A est une liaison covalente ou un radical hydrocarboné aliphatique pouvant comprendre des hétéroatomes et comprenant de 1 à 20 atomes de carbone.
   - R₂ est un radical hydrocarboné aliphatique ou aromatique ramifié ou non comprenant de 2 à 20 atomes de carbone.
   - R₃, R₄ représente l'hydrogène, un radical hydroxyle ou un radical hydrocarboné comprenant un groupement 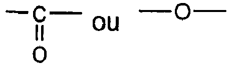
   - R₁ est un radical hydrocarboné comprenant au moins 2 atomes de carbone, linéaire ou cyclique, aromatique ou aliphatique et pouvant comprendre des hétéroatomes.
   - n, m et p représentent chacun un nombre compris entre 30 et 200

La matrice polymérique de l'invention peut également être un copolyesteramide.

Avantageusement m, n et p sont compris entre 30 et 250.

Avantageusement, R2 est un radical pentaméthylénique.

Le polyamide A1 ou le polyester A2 de l'invention comprend avantageusement au moins 45%, de préférence au moins 60%, encore plus préférentiellement au moins 80% molaire de chaînes macromoléculaires répondant à la formule (I).

Le polyamide A1 ou le polyester A2 de l'invention présente avantageusement une masse moléculaire en nombre supérieure ou égale à 5000, et inférieure ou égale à 25000 g/mol.

Le fil et/ou les fibres de polymère thermoplastique destinés à jouer le rôle de matrice seront dénommés ci-après "fil- et/ou fibres-matrice".

Par masse moléculaire en nombre du polyamide A1 ou du polyester A2, on entend la masse moléculaire en nombre pondérée par les fractions molaires des deux types de chaînes macromoléculaires des formules (I) et (II).

Selon un mode de réalisation particulier de l'invention, le polyamide A1 ou le polyester A2 est obtenu par copolymérisation à partir d'un mélange de monomères comprenant :
a) un composé difonctionnel dont les fonctions réactives sont choisies parmi les amines, les acides carboxyliques, les alcools, et leurs dérivés, les fonctions réactives étant identiques,
b) des monomères de formules générales (IIIa) et (IIIb) suivantes dans le cas du polyamide A1

   X'-R'₂-Y' (IIIₐ)

   ou 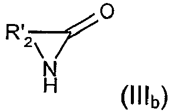
b') des monomères de formules générales (IIIa') et (IIIb') suivantes dans le cas du polyester A2

   X'-R'₂-Y' (IIIₐ')

   ou 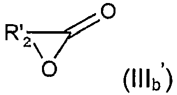 dans lesquelles
   - R'₂ représente un radical hydrocarboné aliphatique, cycloaliphatique ou aromatique, substitué ou non, comprenant de 2 à 20 atomes de carbone, et pouvant comprendre des hétéroatomes,
   - Y' est un radical amine quand X' représente un radical carboxylique, ou Y' est un radical carboxylique quand X' représente un radical amine, dans le cas du polyamide A1
   - Y' est un radical hydroxyle quand X' représente un radical carboxylique, ou Y' est un radical carboxylique quand X' représente un radical hydroxyle, dans le cas du polyester A2

Par acide carboxylique ou radical carboxylique dans la présente invention, on entend les acides carboxyliques et leurs dérivés, tels que les anhydrides d'acide, les chlorures d'acide, les esters, les nitriles etc. Par amine, on entend les amines et leurs dérivés.

Les monomères de formule (IIIₐ) ou (III_{b}) sont de préférence les monomères de polyamides du type polyamide 6, polyamide 11, polyamide 12 etc. On peut citer à titre d'exemple de monomères de formule (IIIₐ) ou (III_{b}) pouvant convenir dans le cadre de l'invention le caprolactame, l'acide 6-aminocaproïque, le lauryllactame etc. Il peut s'agir d'un mélange de monomères différents.

Comme exemples de monomères de formule (IIIₐ') ou (III_{b}') pouvant convenir dans le cadre de l'invention, on peut citer la caprolactone, la δ-valerolactone, l'acide 4-hydroxybenzoïque etc.

Le mélange de monomères peut également comprendre un monomère monofonctionnel utilisé classiquement dans la production des polymères comme limiteur de chaînes.

Le mélange de monomères peut également comprendre des catalyseurs.

Avantageusement le composé a) représente entre 0,1 et 2% molaire par rapport au nombre de moles de monomères de type b) ou b').

Dans le cas du polyamide A1, la copolymérisation des monomères est réalisée dans des conditions classiques de polymérisation de polyamides obtenus à partir de lactames ou d'aminoacides.

Dans le cas du polyester A2, la copolymérisation des monomères est réalisée dans des conditions classiques de polymérisation de polyesters obtenus à partir de lactones ou d'hydroxy-acides

La polymérisation peut comprendre une étape de finition afin d'obtenir le degré de polymérisation souhaité.

Selon un autre mode de réalisation particulier de l'invention, le polyamide A1 ou le polyester A2 est obtenu par mélange en fondu, par exemple à l'aide d'un dispositif d'extrusion, d'un polyamide du type de ceux obtenus par polymérisation des lactames et/ou amino-acides ou d'un polyester du type de ceux obtenus par polymérisation de lactones et/ou hydroxy-acides et d'un composé difonctionnel dont les fonctions réactives sont choisies parmi les amines, les alcools, les acides carboxyliques et leurs dérivés, les fonctions réactives étant identiques. Le polyamide est par exemple du polyamide 6, du polyamide 11, du polyamide 12 etc.. Le polyester est par exemple le polycaprolactone, la poly(pivalolactone) etc..

Le composé difonctionnel est ajouté directement dans le polyamide ou le polyester en milieu fondu.

Avantageusement le composé difonctionnel représente entre 0,05 et 2% en poids par rapport au poids de polyamide ou de polyester.

Le composé difonctionnel de l'invention est de préférence représenté par la formule (IV) :

X"-A-R1-A-X", (IV)

dans laquelle X" représente un radical amine, un radical hydroxyle ou un groupement carboxylique ou leurs dérivés
R1 et A sont tels que décrits ci-dessus.

A titre d'exemple de radical X", on peut citer un radical amine primaire, amine secondaire etc.

Le composé difonctionnel peut être un diacide carboxylique. A titre d'exemples de diacides, on peut citer l'acide adipique qui est l'acide préféré, l'acide décanoïque ou sébacique, l'acide dodécanoïque, les acides phtaliques tels que l'acide téréphtalique, l'acide isophtalique. Il peut s'agir d'un mélange comprenant des sous-produits issus de la fabrication d'acide adipique, par exemple un mélange d'acide adipique, d'acide glutarique et d'acide succinique.

Le composé difonctionnel peut être une diamine. A titre d'exemples de diamines, on peut citer l'hexaméthylène diamine, la méthyl pentaméthylènediamine, la 4,4'-diaminodicyclohexylméthane, la butane diamine, la métaxylylène diamine.

Le composé difonctionnel peut être un dialcool. A titre d'exemples de dialcools, on peut citer le 1,3-propanediol, le 1,2-éthanediol, le 1,4-butanediol, le 1,5-pentanediol, le 1,6-hexanediol et polytetrahydrofurane.

Le composé fonctionnel peut être un mélange d'une diamine et d'un dialcool.

Dans le cas du polyamide A1, les fonctions réactives du composé difonctionnel sont généralement des amines ou des acides carboxyliques ou dérivés.

Dans le cas du polyester A2, les fonctions réactives du composé difonctionnel sont généralement des alcools ou des acides carboxyliques ou dérivés.

De préférence le composé difonctionnel est choisi parmi l'acide adipique, l'acide décanoïque ou sébacique, l'acide dodécanoïque, l'acide téréphtalique, l'acide isophtalique, l'hexaméthylène diamine, la méthyl pentaméthylènediamine, la 4,4'-diaminodicyclohexylméthane, la butane diamine, la métaxylylène diamine, le 1,3-propanediol, le 1,2-éthanediol, le 1,4-butanediol, le 1,5-pentanediol, le 1,6-hexanediol et le polytetrahydrofurane

Selon un autre mode de réalisation particulier de l'invention, le polyamide A1 ou le polyester A2 est obtenu par mélange en fondu, par exemple à l'aide d'un dispositif d'extrusion, d'un polyamide du type de ceux obtenus par polymérisation des lactames et/ou amino-acides ou d'un polyester du type de ceux obtenus par polymérisation de lactones et/ou hydroxy-acides, avec un composé de formule (V) :

G-R-G (V)

dans laquelle
R est un radical hydrocarboné, linéaire ou cyclique, aromatique ou aliphatique, substitué ou non, et pouvant comprendre des hétéroatomes,
G est une fonction ou un radical pouvant réagir sélectivement soit avec les fonctions réactives amine, soit avec les fonctions réactives alcool, soit avec les fonctions réactives acide carboxylique du polyamide ou du polyester, pour former des liaisons covalentes. Le polyamide est par exemple du polyamide 6, du polyamide 11, du polyamide 12. Le polyester est par exemple le polycaprolactone ou le poly(pivalolactone).

Le composé de formule (V) est ajouté directement dans le polyamide ou le polyester en milieu fondu.

Avantageusement le composé de formule (V) représente entre 0,05 et 2% en poids par rapport au poids de polyamide ou de polyester.

Tous les coupleurs de chaînes polymériques ou les agents d'extension de chaînes polymériques connus de l'homme du métier, comprenant généralement deux fonctions identiques ou deux radicaux identiques, et réagissant sélectivement soit avec les fonctions réactives amine, soit avec les fonctions réactives alcool, soit avec les fonctions réactives acide carboxylique du polyamide ou du polyester, pour former des liaisons covalentes, peuvent être utilisés comme composé de formule (V).

Dans le cas de l'obtention de polyamide A1, le composé (V) peut par exemple réagir sélectivement avec les fonctions amine du polyamide dans lequel il est introduit. Ce composé ne réagira pas avec les fonctions acide du polyamide dans ce cas.

De façon avantageuse, lorsque le fil et/ou les fibres de renfort comprennent un polymère thermoplastique, celui-ci se présente préférentiellement sous la forme d'une gaine de polymère qui recouvre le fil et/ou les fibres de renfort.

Selon une variante de l'invention, l'article précurseur du matériau composite comporte également au moins un fil- et/ou des fibres-matrice en polymère thermoplastique linéaire.

Selon une caractéristique préférée, ce polymère linéaire est un polyamide ou copolyamide aliphatique et/ou semicristallin choisi dans le groupe comprenant le PA 4.6, PA 6, PA 6.6, PA 6.9, PA 6.10, PA 6.12, PA 6.36, PA 11, PA 12 ou un polyamide ou copolyamide semi-aromatique semicristallin choisi dans le groupe comprenant les polyphtalamides, et les mélanges de ces polymères et de leurs copolymères.

Le fil- et/ou les fibres-matrice peuvent comprendre également tous les additifs usuels tels que des ignifugeants, des fluidifiants, des stabilisants chaleur et lumière, des cires, des pigments, des nucléants, des antioxydants, des modificateurs de la résistance aux chocs ou analogues et connus de l'homme de l'art.

Avantageusement, le fil et/ou les fibres de renfort sont choisis parmi les fils et/ou les fibres de carbone, de verre, d'aramides et de polyimides.

Selon une variante de cette caractéristique, le fil et/ou les fibres de renfort sont un fil et/ou des fibres naturels, choisis parmi les fils et/ou les fibres de sisal, de chanvre, de lin.

De façon avantageuse, l'article selon l'invention comporte également un matériau en poudre, précurseur de matrice, qui peut être par exemple un polyamide.

De préférence, on utilisera une poudre présentant une granulométrie comprise entre 1 et 100 microns.

Préférentiellement, l'article selon l'invention est sous forme de fils continus ou coupés, de rubans, de mats, de tresses, de tissus, de tricots, de nappes, de multiaxiaux, de non-tissés et/ou de formes complexes comprenant plusieurs des formes précitées. A titre d'exemples, une forme complexe peut être une nappe associée à un non-tissé ou à des fils continus.

Un autre objet de l'invention est un matériau composite obtenu à partir d'un article tel que défini ci-dessus, par fusion au moins partielle du fil- et/ou des fibres-matrice. Ce matériau composite comprend une matrice polymérique et des fils et/ou des fibres de renfort.

Par fusion partielle, on entend la fusion d'au moins une partie d'au moins un fil et/ou une fibre-matrice.

Cette fusion peut être réalisée par thermocompression à une température supérieure à la température de fusion de la matrice polymérique et sous pression. Cette fusion permet d'obtenir une imprégnation homogène des fils et/ou des fibres de renfort par la matrice.

Selon une caractéristique préférentielle, le matériau composite ainsi obtenu, présente un taux de renfort massique compris entre 25 et 80 %.

Encore un autre objet de l'invention est un produit semi-fini obtenu par un procédé de thermocompression ou de calandrage de l'article précité, au cours duquel on fond au moins partiellement le fil- et/ou les fibres-matrice afin d'imprégner le fil et/ou les fibres de renfort.

Avantageusement encore, ce produit semi-fini se présente sous forme de plaques ou de bandes.

Le produit semi-fini consiste en un produit intermédiaire, dans lequel les fils et/ou les fibres de renfort ont été imprégnés par la matrice polymérique qui se trouve sous la forme d'une phase continue. Ce produit n'est pas encore sous sa forme définitive.

Le produit semi-fini doit subir une ultime étape de mise en forme, par un procédé de formage ou thermocompression connus de l'homme de l'art, à des températures supérieures à leur point de transition vitreuse et inférieures à son point de fusion, permettant d'obtenir un produit fini.

Encore un autre objet de l'invention est un produit fini obtenu par un procédé de thermocompression à la forme définitive de l'article précité, au cours duquel on fond au moins partiellement le fil- ou/et les fibres-matrice afin d'imprégner le fil et/ou les fibres de renfort.

De façon générale, les procédés de thermocompression utilisés mettent en oeuvre des basses pressions (inférieures à 20 bars), des températures inférieures à 290°C, et des temps courts (inférieurs à 5 minutes).

D'autres détails et avantages de l'invention apparaîtront plus clairement à la lumière des exemples donnés ci-dessous, uniquement à titre indicatif et à fin d'illustration.

Matrice utilisée : polyamide A1 selon l'invention, obtenu par polycondensation de caprolactame en présence de 0.6% molaire d'acide adipique, dans des conditions classiques de polymérisation de polyamide à partir de caprolactame

### Exemple 1- Plaque semi-finie réalisée à partir de polyamide selon l'invention et de fils de renfort

Une série d'essais à été réalisée à partir d'un fil multifilaments de polyamide A1 décrit ci-dessus, présentant un titre par brin compris entre 21 et 22 dtex et une ténacité voisine de 23 cN/Tex. Un tel multifilament est assemblé, lors d'une opération de tissage multiaxial, avec un fil de renfort continu de verre, présentant un titre de 600 Tex. Afin de valider la haute fluidité de la matrice à l'état fondu, des tissus multiaxiaux sont réalisés à partir de couches élémentaires, définies comme suit:

### Couche élémentaire

Pli n°1 : fil de renfort - orientation : - 45°
Pli n°2 : fil de renfort - orientation : +45°
Pli n°3 : fil Polyamide A1 (matrice) - orientation : 90°

Un composite stratifié est ensuite réalisé en plaçant plusieurs couches élémentaires (entre 2 et 10) du tissu obtenu dans un moule présentant une forme de plaque, sous une presse à plateaux chauffants, pendant une durée de 1 à 3 minutes, sous une pression comprise entre 1 et 20 Bars et une température comprise entre 250 et 260 °C (supérieure à la température de fusion du Polyamide A1). Après refroidissement jusqu'à une température de 50-60°C, le composite est démoulé. Le taux massique de renfort est alors compris entre 60 et 70%.

La haute fluidité du polyamide A1 permet d'obtenir une bonne imprégnation du renfort par la matrice sans engendrer ni les pertes de propriétés mécaniques, ni les problèmes de résistance à la fatigue constatés avec des polymères à bas poids moléculaire. Les propriétés mécaniques en flexion sont comparées à celles d'un composite thermodurcissable obtenu à partir du même matériau de renfort et d'une résine époxy dans le tableau 1.

**Tableau 1 : Plaque composite polyamide/fibres de verre**

| **Fibres de verre** | **Contrainte de rupture** (MPa) | **Module de flexion** (MPa) | **Allongement à la rupture** (%) |
|---|---|---|---|
| **Matrice Epoxy** | **630,0** | **21000** | **3,53** |
| **Matrice PA1** | **517** | **21000** | **3,26** |

L'utilisation d'un renfort sous forme de fil continu permet de conserver des propriétés mécaniques élevées dans des directions privilégiées. Le fait d'utiliser la matrice sous la forme d'un fil permet, outre un avantage économique par rapport aux solutions de poudrage ou de pré-imprégnation classiques, une manipulation aisée ainsi qu'une bonne maîtrise du taux de renforcement du matériau composite final.

Le tableau n°2 donne une synthèse des propriétés mécaniques obtenues.

**Tableau 2: Synthèse des propriétés mécaniques obtenues.**

| | **Unités** | **Norme** | **Tissu Multiaxial PA A1 / Verre** |
|---|---|---|---|
| Taux d'imprégnation (p/p) | % | | 65 |
| Densité | | | 1.8 |

| ***Traction Simple*** | | | |
|---|---|---|---|
| Contrainte rupture | MPa | ISO 527 | 545 |
| Module d'Young | GPa | ISO 527 | 21.3 |
| Allongement | % | ISO 527 | 2.76 |

| ***Flexion 3 points*** | | | |
|---|---|---|---|
| Contrainte rupture | MPa | ISO 14125 | 517 |
| Module de flexion | GPa | ISO 14125 | 21 |

| ***Choc multiaxial*** | | | |
|---|---|---|---|
| Force maximale | DaN | ISO 6603-2 | 650 |

## Revendications

1. Article précurseur d'un matériau composite comprenant une matrice polymérique et au moins un fil et/ou des fibres de renfort, ledit article comprenant au moins un fil et/ou des fibres de renfort et au moins un fil et/ou des fibres de matrice polymérique **caractérisé en ce que** :
- ledit fil et/ou lesdites fibres de renfort sont en matériau de renfort et comprennent éventuellement une partie en polymère thermoplastique
- ledit fil et/ou lesdites fibres de matrice polymérique sont en polymère thermoplastique, et **en ce que**,
- ledit polymère thermoplastique dudit fil et/ou desdites fibres de renfort et/ou dudit fil et/ou desdites fibres de matrice polymérique comprend au moins un polycondensat constitué de :
• 30 à 100% molaire (bornes comprises) de chaînes macromoléculaires répondant à la formule (I) suivante :
R₃-(X-R₂-Y)ₙ-X-A-R₁-A-X-(Y-R₂-X)ₘ-R₃ (I)
• 0 à 70% molaire (bornes comprises) de chaînes macromoléculaires répondant à la formule (II) suivante
R₄-[Y-R₂-X]ₚ-R₃ (II)
dans lesquelles
- X-Y- est un radical issu de la condensation de deux fonctions réactives F₁ et F₂ telles que
- F₁ est le précurseur du radical -X- et F₂ le précurseur du radical -Y- ou inversement,
- les fonctions F₁ ne peuvent réagir entre elles par condensation
- les fonctions F₂ ne peuvent réagir entre elles par condensation
- A est une liaison covalente ou un radical hydrocarboné aliphatique pouvant comprendre des hétéroatomes et comprenant de 1 à 20 atomes de carbone.
- R₂ est un radical hydrocarboné aliphatique ou aromatique ramifié ou non comprenant de 2 à 20 atomes de carbone.
- R₃, R₄ représente l'hydrogène, un radical hydroxyle ou un radical hydrocarboné
- R₁ est un radical hydrocarboné comprenant au moins 2 atomes de carbone, linéaire ou cyclique, aromatique ou aliphatique et pouvant comprendre des hétéroatomes.
- -n, m et p représentent chacun un nombre compris entre 30 et 200

2. Article selon la revendication 1, **caractérisé en ce que** le polymère thermoplastique comprend au moins un polyamide A1 constitué de :
• 30 à 100% molaire (bornes comprises) de chaînes macromoléculaires répondant à la formule (I) suivante :
R₃-(X-R₂-Y)ₙ-X-A-R₁-A-X-(Y-R₂-X)ₘ-R₃ (I)
• 0 à 70% molaire (bornes comprises) de chaînes macromoléculaires répondant à la formule (II) suivante
R₄-[Y-R₂-X]ₚ-R₃ (II)
dans lesquelles :
- Y est le radical 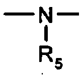 quand X représente le radical 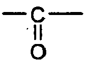
- Y est le radical 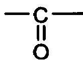 quand X représente le radical 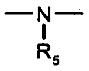
- A est une liaison covalente ou un radical hydrocarboné aliphatique pouvant comprendre des hétéroatomes et comprenant de 1 à 20 atomes de carbone.
- R₂ est un radical hydrocarboné aliphatique ou aromatique ramifié ou non comprenant de 2 à 20 atomes de carbone.
- R₃, R₄ représente l'hydrogène, un radical hydroxle ou un radical hydrocarboné comprenant un groupement 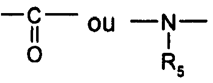
- R₅ représente l'hydrogène ou un radical hydrocarboné comprenant de 1 à 6 atomes de carbone
- R₁ est un radical hydrocarboné comprenant au moins 2 atomes de carbone, linéaire ou cyclique, aromatique ou aliphatique et pouvant comprendre des hétéroatomes.
- n, m et p représentent chacun un nombre compris entre 30 et 200

3. Article selon la revendication 1, **caractérisé en ce que** le polymère thermoplastique comprend au moins un polyester A2 constitué de :
• 30 à 100% molaire (bornes comprises) de chaînes macromoléculaires répondant à la formule (I) suivante :
R₃-(X-R₂-Y)ₙ-X-A-R₁-A-X-(Y-R₂-X)ₘ-R₃ (I)
• 0 à 70% molaire (bornes comprises) de chaînes macromoléculaires répondant à la formule (II) suivante
R₄-[Y-R₂-X]ₚ-R₃ (II)
dans lesquelles :
- Y est le radical 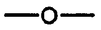 quand X représente le radical 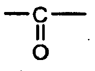
- Y est le radical 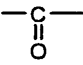 quand X représente le radical 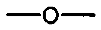
- A est une liaison covalente ou un radical hydrocarboné aliphatique pouvant comprendre des hétéroatomes et comprenant de 1 à 20 atomes de carbone.
- R₂ est un radical hydrocarboné aliphatique ou aromatique ramifié ou non comprenant de 2 à 20 atomes de carbone.
- R₃, R₄ représente l'hydrogène, un radical hydroxyle ou un radical hydrocarboné comprenant un groupement 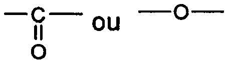
- R₁ est un radical hydrocarboné comprenant au moins 2 atomes de carbone, linéaire ou cyclique, aromatique ou aliphatique et pouvant comprendre des hétéroatomes.
- n, m et p représentent chacun un nombre compris entre 30 et 200

4. Article selon l'une des revendications précédentes, **caractérisé en ce que** n, m et p sont compris entre 30 et 150

5. Article selon l'une des revendications 2 à 4, **caractérisé en ce que** le polyamide A1 ou le polyester A2 comprend au moins 45%, de préférence au moins 60% molaire de chaînes macromoléculaires répondant à la formule (I)

6. Article selon l'une des revendications précédentes, **caractérisé en ce que** R2 est un radical pentaméthylénique

7. Article selon l'une des revendications 2 à 6, **caractérisé en ce que** le polyamide A1 ou le polyester A2 est obtenu par copolymérisation à partir d'un mélange de monomères comprenant :
a) un composé difonctionnel dont les fonctions réactives sont choisies parmi les amines, les acides carboxyliques, les alcools, et leurs dérivés, les fonctions réactives étant identiques,
b) des monomères de formules générales (IIIa) et (IIIb) suivantes dans le cas du polyamide A1
X'-R'₂-Y' (IIIₐ)
ou 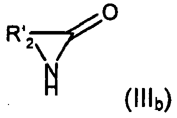
b') des monomères de formules générales (IIIa') et (IIIb') suivantes dans le cas du polyester A2
X'-R'₂-Y' (IIIₐ^{'})
ou 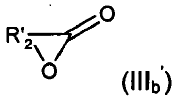 dans lesquelles
• R'₂ représente un radical hydrocarboné aliphatique, cycloaliphatique ou aromatique, substitué ou non, comprenant de 2 à 20 atomes de carbone, et pouvant comprendre des hétéroatomes,
• Y' est un radical amine quand X' représente un radical carboxylique, ou Y' est un radical carboxylique quand X' représente un radical amine, dans le cas du polyamide A1
• Y' est un radical hydroxyle quand X' représente un radical carboxylique, ou Y' est un radical carboxylique quand X' représente un radical hydroxyle, dans le cas du Polyester A2

8. Article selon la revendication 7, **caractérisé en ce que** le composé a) représente entre 0,1 et 2% molaire par rapport au nombre de moles de monomères de type b) ou b')

9. Article selon l'une des revendications 2 à 6, **caractérisé en ce que** le polyamide A1 ou le polyester A2 est obtenu par mélange en fondu d'un polyamide du type de ceux obtenus par polymérisation des lactames et/ou amino-acides ou d'un polyester du type de ceux obtenus par polymérisation de lactones et/ou hydroxy-acides avec un composé difonctionnel dont les fonctions réactives sont choisies parmi les amines, les alcools, les acides carboxyliques et leurs dérivés, les fonctions réactives étant identiques.

10. Article selon la revendication 9, **caractérisé en ce que** le composé difonctionnel représente entre 0,05 et 2% en poids par rapport au poids de polyamide ou de polyester

11. Article selon l'une des revendications 7 à 10, **caractérisé en ce que** le composé difonctionnel est représenté par la formule (IV) :
X"-A-R₁-A-X" (IV)
dans laquelle X" représente un radical amine, un radical hydroxyle, un groupement carboxylique ou leurs dérivés

12. Article selon l'une des revendications 7 à 11, **caractérisé en ce que** le composé difonctionnel est choisi parmi l'acide adipique, l'acide décanoïque ou sébacique, l'acide dodécanoïque, l'acide téréphtalique, l'acide isophtatique, l'hexaméthylène diamine, la méthyl pentaméthylènediamine, la 4,4'-diaminodicyclohexylméthane, la butane diamine, la métaxylylène diamine, le 1,3-propanediol, le 1,2-éthanediol, le 1,4-butanediol, le 1,5-pentanediol, le 1,6-hexanediol et le polytetrahydrofurane

13. Article selon l'une des revendications précédentes, **caractérisé en ce qu'**il comporte également au moins un fil- et/ou des fibres-matrice en polymère thermoplastique linéaire

14. Article selon la revendication 13, **caractérisé en ce que** le polymère linéaire est un polyamide ou copolyamide aliphatique et/ou semicristallin choisi dans le groupe comprenant le PA 4.6, PA 6,PA 6.6, PA 6.9, PA 6.10, PA 6.12, PA 6.36, PA 11, PA 12 ou un polyamide ou copolyamide semi-aromatique semicristallin choisi dans le groupe comprenant les polyphtalamides, et les mélanges de ces polymères et de leurs copolymères.

15. Article selon l'une des revendications précédentes, **caractérisé en ce que** le fil- et/ou les fibres-matrice comprennent également des additifs, tels que des ignifugeants, des fluidifiants, des stabilisants chaleur et lumière, des cires, des pigments, des nucléants, des antioxydants, des modificateurs de la résistance aux chocs ou analogues.

16. Article selon l'une des revendications précédentes, **caractérisé en ce que** le fil et/ou les fibres de renfort sont choisis parmi les fils et/ou les fibres de carbone, de verre, d'aramides et de polyimides.

17. Article selon l'une des revendications 1 à 15, **caractérisé en ce que** le fil et/ou les fibres de renfort sont un fil et/ou des fibres naturels, choisis parmi les fils et/ou les fibres dé sisal, de chanvre, de lin.

18. Article selon l'une des revendications précédentes, **caractérisé en ce qu'**il comporte également un matériau en poudre précurseur de matrice.

19. Article selon la revendication précédente, **caractérisé en ce que** ledit matériau en poudre précurseur de matrice est un polyamide.

20. Article selon l'une des revendications précédentes, **caractérisé en ce qu'**il est sous forme de fils continus ou coupés, de rubans, de mats, de tressés, de tissus, de tricots, de nappes, de multiaxiaux, de non-tissés et/ou de formes complexes comprenant plusieurs des formes précitées.

21. Matériau composite **caractérisé en ce qu'**il est obtenu à partir d'un article selon l'une des revendications précédentes, par fusion au moins partielle du fil- et/ou des fibres-matrice.

22. Matériau composite selon la revendication précédente, **caractérisé en ce qu'**il présente un taux de renfort massique compris entre 25 et 80 %.

23. Produit semi-fini **caractérisé en ce qu'**il est obtenu par un procédé de thermoformage ou de calandrage de l'article selon l'une des revendications 1 à 22, au cours duquel on fond au moins partiellement le fil- ou/et les fibres-matrice afin d'imprégner le fil et/ou les fibres de renfort.

24. Produit semi-fini selon la revendication 23, **caractérisé en ce qu'**il se présente sous forme de plaques ou de bandes.

25. Produit fini **caractérisé en ce qu'**il est obtenu par un procédé de thermoformage à la forme finale de l'article selon l'une des revendications 1 à 22, au cours duquel on fond au moins partiellement le fil- ou/et les fibres-matrice afin d'imprégner le fil et/ou les fibres de renfort.

26. Produit fini **caractérisé en ce qu'**il est obtenu par un procédé de formage ou de thermocompression à la forme finale du produit semi-fini selon l'une des revendications 23 ou 24.

## Patentansprüche

1. Vorläufergegenstand für einen Verbundwerkstoff mit einer Polymermatrix und mindestens einem Verstärkungsgarn und/oder Verstärkungsfasern, wobei der Gegenstand mindestens ein Verstärkungsgarn und/oder Verstärkungsfasern und mindestens ein Polymermatrixgarn und/oder Polymermatrixfasern umfasst, **dadurch gekennzeichnet, dass** :
- das Verstärkungsgarn und/oder die Verstärkungsfasern aus Verstärkungsmaterial bestehen und gegebenenfalls einen Teil aus thermoplastischem Polymer umfassen,
- das Polymermatrixgarn und/oder die Polymermatrixfasern aus thermoplastischem Polymer bestehen, und dadurch, dass
- das thermoplastische Polymer des Verstärkungsgarns und/oder der Verstärkungsfasern und/oder des Polymermatrixgarns und/oder der Polymermatrixfasern mindestens ein Polykondensat aus :
• 30 bis 100 Mol-% (Grenzen eingeschlossen) makromolekularen Ketten der folgenden Formel (I) :
R₃-(X-R₂-Y)ₙ-X-A-R₁-A-X-(Y-R₂-X)ₘ-R₃ (I)
• 0 bis 70 Mol-% (Grenzen eingeschlossen) makromolekularen Ketten der folgenden Formel (II) :
R₄-[Y-R₂-X]ₚ-R₃ (II)
in denen
- -X-Y- für einen aus der Kondensation von zwei reaktiven Funktionen F₁ und F₂, die so beschaffen sind, dass :
- F₁ der Vorläufer des Rests -X- ist und F₂ der Vorläufer des Rests -Y- ist oder umgekehrt,
- die Funktionen F₁ nicht durch Kondensation miteinander reagieren können und
- die Funktionen F₂ nicht durch Kondensation miteinander reagieren können, erhaltenen Rest steht;
- A für eine kovalente Bindung oder einen aliphatischen Kohlenwasserstoffrest, der Heteroatome enthalten kann und 1 bis 20 Kohlenstoffatome enthält, steht;
- R₂ für einen verzweigten oder unverzweigten aliphatischen oder aromatischen Kohlenwasserstoffrest mit 2 bis 20 Kohlenstoffatomen steht;
- R₃ und R₄ für Wasserstoff, einen Hydroxylrest oder einen Kohlenwasserstoffrest stehen;
- R₁ für einen linearen oder cyclischen, aromatischen oder aliphatischen Kohlenwasserstoffrest, der mindestens 2 Kohlenstoffatome enthält und Heteroatome enthalten kann, steht;
- n, m und p jeweils für eine Zahl zwischen 30 und 200 stehen;
umfasst.

2. Gegenstand nach Anspruch 1, **dadurch gekennzeichnet, dass** das thermoplastische Polymer mindestens ein Polyamid A1 aus :
• 30 bis 100 Mol-% (Grenzen eingeschlossen) makromolekularen Ketten der folgenden Formel (I) :
R₃-(X-R₂-Y)ₙ-X-A-R₁-A-X-(Y-R₂-X)ₘ-R₃ (I)
• 0 bis 70 Mol-% (Grenzen eingeschlossen) makromolekularen Ketten der folgenden Formel (II) :
R₄-[Y-R₂-X]ₚ-R₃ (II)
in denen
- Y für den Rest 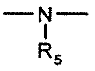 steht, wenn X für den Rest 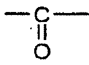 steht;
- Y für den Rest 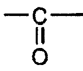 steht, wenn X für den Rest 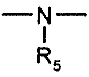 steht;
- A für eine kovalente Bindung oder einen aliphatischen Kohlenwasserstoffrest, der Heteroatome enthalten kann und 1 bis 20 Kohlenstoffatome enthält, steht;
- R₂ für einen verzweigten oder unverzweigten aliphatischen oder aromatischen Kohlenwasserstoffrest mit 2 bis 20 Kohlenstoffatomen steht;
- R₃ und R₄ für Wasserstoff, einen Hydroxylrest oder einen Kohlenwasserstoffrest mit einer Gruppe 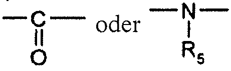 stehen;
- R₅ für Wasserstoff oder einen Kohlenwasserstoffrest mit 1 bis 6 Kohlenstoffatomen steht;
- R₁ für einen linearen oder cyclischen, aromatischen oder aliphatischen Kohlenwasserstoffrest, der mindestens 2 Kohlenstoffatome enthält und Heteroatome enthalten kann, steht;
- n, m und p jeweils für eine Zahl zwischen 30 und 200 stehen;
umfasst.

3. Gegenstand nach Anspruch 1, **dadurch gekennzeichnet, dass** das thermoplastische Polymer mindestens einen Polyester A2 aus :
• 30 bis 100 Mol-% (Grenzen eingeschlossen) makromolekularen Ketten der folgenden Formel (I) :
R₃-(X-R₂-Y)ₙ-X-A-R₁-A-X-(Y-R₂-X)ₘ-R₃ (I)
• 0 bis 70 Mol-% (Grenzen eingeschlossen) makromolekularen Ketten der folgenden Formel (II) :
R₄-[Y-R₂-X]ₚ-R₃ (II)
in denen
- Y für den Rest 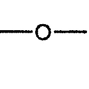 steht, wenn X für den Rest 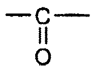 steht;
- Y für den Rest 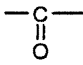 steht, wenn X für den Rest 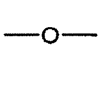 steht;
- A für eine kovalente Bindung oder einen aliphatischen Kohlenwasserstoffrest, der Heteroatome enthalten kann und 1 bis 20 Kohlenstoffatome enthält, steht;
- R₂ für einen verzweigten oder unverzweigten aliphatischen oder aromatischen Kohlenwasserstoffrest mit 2 bis 20 Kohlenstoffatomen steht;
- R₃ und R₄ für Wasserstoff, einen Hydroxylrest oder einen Kohlenwasserstoffrest mit einer Gruppe 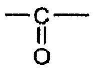 oder 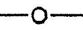 stehen;
- R₁ für einen linearen oder cyclischen, aromatischen oder aliphatischen Kohlenwasserstoffrest, der mindestens 2 Kohlenstoffatome enthält und Heteroatome enthalten kann, steht;
- n, m und p jeweils für eine Zahl zwischen 30 und 200 stehen;
umfasst.

4. Gegenstand nach einem der vorhergehenden Ansprüche, **dadurch gekennzeichnet, dass** n, m und p zwischen 30 und 150 liegen.

5. Gegenstand nach einem der Ansprüche 2 bis 4, **dadurch gekennzeichnet, dass** das Polyamid A1 bzw. der Polyester A2 mindestens 45 Mol-% und vorzugsweise mindestens 60 Mol-% der makromolekularen Ketten der Formel (I) umfassen.

6. Gegenstand nach einem der vorhergehenden Ansprüche, **dadurch gekennzeichnet, dass** R2 für einen Pentamethylenrest steht.

7. Gegenstand nach einem der Ansprüche 2 bis 6, **dadurch gekennzeichnet, dass** das Polyamid A1 bzw. der Polyester A2 durch Copolymerisation aus einer Monomerenmischung, umfassend :
a) eine difunktionelle Verbindung, deren reaktive Funktionen aus Aminen, Carbonsäuren, Alkoholen und Derivaten davon ausgewählt sind, wobei die reaktiven Funktionen identisch sind;
b) Monomere der folgenden allgemeinen Formeln (IIIa) und (IIIb) im Fall des Polyamids A1
X'-R'₂-Y' (IIIₐ)
oder 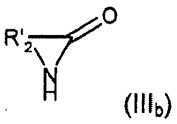
b') Monomere der folgenden allgemeinen Formeln (IIIa') und (IIIb') im Fall des Polyesters A2
X'-R'₂-Y' (IIIₐ^{'})
oder 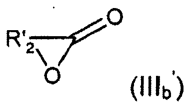 in denen
• R'₂ für einen gegebenenfalls substituierten, aliphatischen, cycloaliphatischen oder aromatischen Kohlenwasserstoffrest, der 2 bis 20 Kohlenstoffatome enthält und Heteroatome enthalten kann, steht;
• im Fall des Polyamids A1 Y' für einen Aminrest steht, wenn X' für einen Carboxylrest steht, oder Y' für einen Carboxylrest steht, wenn X' für einen Aminrest steht;
• im Fall des Polyesters A2 Y' für einen Hydroxylrest steht, wenn X' für einen Carboxylrest steht, oder Y' für einen Carboxylrest steht, wenn X' für einen Hydroxylrest steht;
erhalten wird.

8. Gegenstand nach Anspruch 7, **dadurch gekennzeichnet, dass** die Verbindung a) zwischen 0,1 und 2 Mol-%, bezogen auf die Zahl der Mole der Monomere des Typs b) bzw. b'), ausmacht.

9. Gegenstand nach einem der Ansprüche 2 bis 6, **dadurch gekennzeichnet, dass** das Polyamid A1 bzw. der Polyester A2 durch Schmelzemischen eines Polyamids vom Typ der durch Polymerisation von Lactamen und/oder Aminosäuren erhaltenen Polyamide oder eines Polyesters des Typs der durch Polymerisation von Lactonen und/oder Hydroxysäuren erhaltenen Polyester mit einer difunktionellen Verbindung, deren reaktive Funktionen aus Aminen, Alkoholen, Carbonsäuren und Derivaten davon ausgewählt sind, wobei die reaktiven Funktionen identisch sind, erhalten wird.

10. Gegenstand nach Anspruch 9, **dadurch gekennzeichnet, dass** die difunktionelle Verbindung zwischen 0,05 und 2 Mol-%, bezogen auf das Gewicht des Polyamids bzw. des Polyesters, ausmacht.

11. Gegenstand nach einem der Ansprüche 7 bis 10, **dadurch gekennzeichnet, dass** die difunktionelle Verbindung durch Formel (IV) wiedergegeben wird :
X"-A-R₁-A-X" (IV)
in der X" für einen Aminrest, einen Hydroxylrest, eine Carboxylgruppe oder Derivate davon steht.

12. Gegenstand nach einem der Ansprüche 7 bis 11, **dadurch gekennzeichnet, dass** die difunktionelle Verbindung aus Adipinsäure, Decan- oder Sebacinsäure, Dodecansäure, Terephthalsäure, Isophthalsäure, Hexamethylendiamin, Methylpentamethylendiamin, 4,4'-Diaminodicyclohexylmethan, Butandiamin, meta-Xylylendiamin, 1,3-Propandiol, 1,2-Ethandiol, 1,4-Butandiol, 1,5-Pentandiol, 1,6-Hexandiol und Polytetrahydrofuran ausgewählt ist.

13. Gegenstand nach einem der vorhergehenden Ansprüche, **dadurch gekennzeichnet, dass** er außerdem mindestens ein Matrixgarn und/oder Matrixfasern aus linearem thermoplastischem Polymer umfasst.

14. Gegenstand nach Anspruch 13, **dadurch gekennzeichnet, dass** es sich bei dem linearen Polymer um ein aliphatisches und/oder teilkristallines Polyamid oder Copolyamid aus der Gruppe umfassend PA 4.6, PA 6, PA 6.6, PA 6.9, PA 6.10, PA 6.12, PA 6.36, PA 11 und PA 12 oder ein teilkristallines teilaromatisches Polyamid oder Copolyamid aus der Gruppe umfassend Polyphthalamide und Mischungen dieser Polymere und ihrer Copolymere handelt.

15. Gegenstand nach einem der vorhergehenden Ansprüche, **dadurch gekennzeichnet, dass** das Matrixgarn und/oder die Matrixfasern außerdem Additive, wie Flammschutzmittel, Fluidisierungsmittel, Wärme- und Lichtschutzmittel, Wachse, Pigmente, Nukleierungsmittel, Antioxidantien, Schlagzähigkeitsmodifikatoren oder dergleichen, umfassen.

16. Gegenstand nach einem der vorhergehenden Ansprüche, **dadurch gekennzeichnet, dass** das Verstärkungsgarn und/oder die Verstärkungsfasern aus Kohle-, Glas-, Aramid- und Polymidgarnen und/oder -fasern ausgewählt sind.

17. Gegenstand nach einem der Ansprüche 1 bis 15, **dadurch gekennzeichnet, dass** es sich bei dem Verstärkungsgarn und/oder den Verstärkungsfasern um ein natürliches Garn und/oder natürliche Fasern handelt, die aus Sisal-, Hanf- und Flachsgarnen und/oder -fasern ausgewählt sind.

18. Gegensatnd nach einem der vorhergehenden Ansprüche, **dadurch gekennzeichnet, dass** er außerdem ein pulverförmiges Matrixvorläufermaterial umfasst.

19. Gegenstand nach dem vorhergehenden Anspruch, **dadurch gekennzeichnet, dass** es sich bei dem pulverförmigen Matrixvorläufermaterial um ein Polyamid handelt.

20. Gegenstand nach einem der vorhergehenden Ansprüche, **dadurch gekennzeichnet, dass** er in Form von Endlosgarnen oder geschnittenen Garnen, Streifen, Matten, Geflechten, Geweben, Gestricken, Tüchern, mehrachsigen textilen Flächengebilden, Vliesstoffen und/oder komplexen Formen, die mehrere der oben aufgeführten Formen umfassen, vorliegt.

21. Verbundwerkstoff, **dadurch gekennzeichnet, dass** er aus einem Gegenstand nach einem der vorhergehenden Ansprüche durch mindestens teilweises Schmelzen des Matrixgarns und/oder der Matrixfasern erhalten wird.

22. Verbundwerkstoff nach dem vorhergehenden Anspruch, **dadurch gekennzeichnet, dass** er einen Verstärkungsgehalt zwischen 25 und 80 Gew.-% aufweist.

23. Halbzeug, **dadurch gekennzeichnet, dass** es durch ein Verfahren des Thermoformens oder Kalandrierens des Gegenstands nach einem der Ansprüche 1 bis 22, in dessen Verlauf das Matrixgarn und/oder die Matrixfasern mindestens teilweise aufgeschmolzen werden, um das Verstärkungsgarn bzw. die Verstärkungsfasern zu imprägnieren, erhalten wird.

24. Halbzeug nach Anspruch 23, **dadurch gekennzeichnet, dass** es in Form von Platten oder Bändern vorliegt.

25. Endprodukt, **dadurch gekennzeichnet, dass** es durch ein Verfahren des Thermoformens des Gegenstands nach einem der Ansprüche 1 bis 22 in die Endform, in dessen Verlauf das Matrixgarn und/oder die Matrixfasern mindestens teilweise aufgeschmolzen werden, um das Verstärkungsgarn bzw. die Verstärkungsfasern zu imprägnieren, erhalten wird.

26. Endprodukt, **dadurch gekennzeichnet, dass** es durch ein Verfahren des Formens oder Thermopressens des Halbzeugs nach einem der Ansprüche 23 oder 24 in die Endform erhalten wird.

## Claims

1. A precursor article of a composite material comprising a polymeric matrix and at least one reinforcing yarn and/or fibers, said article comprising at least one reinforcing yarn and/or fibers and at least one polymeric-matrix yarn and/or fibers, **characterized in that** :
- said reinforcing yarn and/or fibers are made of reinforcing material and optionally include a part made of a thermoplastic polymer;
- said polymeric-matrix yarn and/or fibers are made of a thermoplastic polymer, and **in that** :
- said thermoplastic polymer of said reinforcing yarn and/or fibers and/or of said polymeric-matrix yarn and/or fibers comprises at least one polycondensate consisting of :
• 30 to 100 mol percent (limits inclusive) of macromolecular chains satisfying the following formula (I) :
R₃-(X-R₂-Y)ₙ-X-A-R₁-A-X-(Y-R₂-X)ₘ-R₃ (I)
• 0 to 70 mol percent (limits inclusive) of macromolecular chains satisfying the following formula (II) :
R₄-[Y-R₂-X]ₚ-R₃ (II)
wherein :
- -X-Y- is a radical obtained from the condensation of two reactive functional groups F₁ and F₂ such that :
- F₁ is the precursor of the -X- radical and F₂ is the precursor of the -Y-radical, or vice versa,
- the functional groups F₁ cannot react together by condensation
- the functional groups F₂ cannot react together by condensation
- A is a covalent bond or an aliphatic hydrocarbon radical that may comprise heteroatoms and contains 1 to 20 carbon atoms
- R₂ is a branched or unbranched, aliphatic or aromatic hydrocarbon radical containing 2 to 20 carbon atoms
- R₃, R₄ represents hydrogen, a hydroxyl radical or a hydrocarbon radical
- R₁ is a linear or cyclic, aromatic or aliphatic, hydrocarbon radical containing at least 2 carbon atoms and optionally including heteroatoms; and
- n, m and p each represent a number between 30 and 200.

2. The article according to claim 1, **characterized in that** the thermoplastic polymer comprises at least one polyamide A1 consisting of:
• 30 to 100 mol percent (limits inclusive) of macromolecular chains satisfying the following formula (I) :
R₃-(X-R₂-Y)ₙ-X-A-R₁-A-X-(Y-R₂-X)ₘ-R₃ (I)
• 0 to 70 mol percent (limits inclusive) of macromolecular chains satisfying the following formula (II) :
R₄-[Y-R₂-X]ₚ-R₃ (II)
wherein :
- Y is the radical 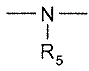 when X is the radical 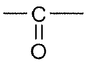
- Y is the radical 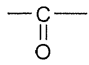 when X is the radical 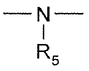
- A is a covalent bond or an aliphatic hydrocarbon radical optionally including heteroatoms and containing 1 to 20 carbon atoms,
- R₂ is a branched or unbranched, aliphatic or aromatic, hydrocarbon radical containing 2 to 20 carbon atoms.
- R₃, R₄ represents hydrogen, a hydroxyl radical or a hydrocarbon radical comprising a group 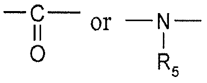
- R₅ represents hydrogen or a hydrocarbon radical containing 1 to 6 carbon atoms;
- R₁ is a linear or cyclic, aromatic or aliphatic, hydrocarbon radical containing at least 2 carbon atoms and optionally including heteroatoms, and
- n, m and p each represent a number between 30 and 200.

3. The article according to claim 1, **characterized in that** the thermoplastic polymer comprises at least one polyester A2 consisting of :
• 30 to 100 mol percent (limits inclusive) of macromolecular chains satisfying the following formula (1) :
R₃-(X-R₂-Y)ₙ-X-A-R₁-A-X-(Y-R₂-X)ₘ-R₃ (I)
• 0 to 70 mol percent (limits inclusive) of macromolecular chains satisfying the following formula (II) :
R₄-[Y-R₂-X]ₚ-R₃ (II)
wherein:
- Y is the radical 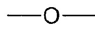 when X is the radical 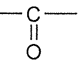
- Y is the radical 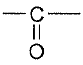 when X is the radical 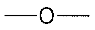
- A is a covalent bond or an aliphatic hydrocarbon radical optionally including heteroatoms and containing 1 to 20 carbon atoms,
- R₂ is a branched or unbranched, aliphatic or aromatic, hydrocarbon radical containing 2 to 20 carbon atoms.
- R₃, R₄ represents hydrogen, a hydroxyl radical or a hydrocarbon radical comprising a group 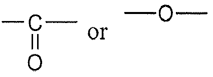
- R₁ is a linear or cyclic, aromatic or aliphatic, hydrocarbon radical containing at least 2 carbon atoms and optionally including heteroatoms, and
- n, m and p each represent a number between 30 and 200.

4. The article according to anyone of the preceding claims, **characterized in that** n, m and p are between 30 and 150.

5. The article according to anyone of claims 2 to 4, **characterized in that** the polyamide A1 or the polyester A2 comprises at least 45 mol percent, preferably at least 60 mol percent, of macromolecular chains satisfying formula (I).

6. The article according to anyone of the preceding claims, wherein R2 is a pentamethylene radical.

7. The article according to anyone of claims 2 to 6, **characterized in that** the polyamide A1 or the polyester A2 is obtained by copolymerization from a monomer mixture comprising :
a) a difunctional compound, the reactive functional groups of which are chosen from amines, carboxylic acids, alcohols and derivatives thereof, the reactive functional groups being identical;
b) monomers of the following general formulae (IIIa) and (IIIb) in the case of the polyamide A1 :
X'-R'₂-Y' (IIIₐ)
or 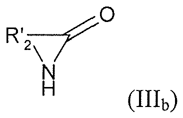
b') monomers of the following general formulae (IIIa') and (IIIb') in the case of the polyester A2 :
X'-R'₂-Y' (IIIₐ^{'})
or 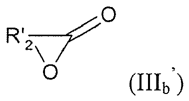 wherein :
• R'₂ represents a substituted or unsubstituted, aliphatic, cycloaliphatic or aromatic hydrocarbon radical containing 2 to 20 carbon atoms and optionally including heteroatoms;
• Y' is an amine radical when X' represents a carboxylic radical, or Y' is a carboxylic radical when X' represents an amine radical, in the case of the polyamide A1;
• Y' is a hydroxyl radical when X' represents a carboxylic radical, or Y' is a carboxylic radical when X' represents a hydroxyl radical, in the case of the polyester A2.

8. The article according to claim 7, **characterized in that** compound a) represents between 0.1 and 2 mol percent relative to the number of moles of monomers of type b) or b').

9. The article according to anyone of claims 2 to 6, **characterized in that** the polyamide A1 or the polyester A2 is obtained by melt blending a polyamide obtained by polymerization of lactams and/or amino acids or a polyester obtained by polymerization of lactones and/or hydroxyacids with a difunctional compound, the reactive functional groups of which are chosen from amines, alcohols, carboxylic acids and derivatives thereof, the reactive functional groups being identical.

10. The article according to claim 9, **characterized in that** the difunctional compound represents between 0.05 and 2 percent by weight relative to the weight of polyamide or polyester.

11. The article according to anyone of claims 7 to 10, **characterized in that** the difunctional compound is represented by formula (IV) :
X"-A-R₁-A-X" (IV)
in which X" represents an amine radical, a hydroxyl radical, a carboxylic group or derivatives thereof.

12. The article according to anyone of claims 7 to 11, **characterized in that** the difunctional compound is adipic acid, decanoic or sebacic acid, dodecanoic acid, terephthalic acid, isophthalic acid, hexamethylenediamine, methylpentamethylenediamine, 4,4'-diamino-dicyclohexylmethane, butanediamine, metaxylylenediamine, 1,3-propanediol, 1,2-ethanediol, 1,4-butanediol, 1,5-pentanediol, 1,6-hexanediol or polytetrahydrofuran.

13. The article according to anyone of the preceding claims, **characterized in that** it further comprises at least one matrix yam and/or fibers made of a linear thermoplastic polymer.

14. The article according to claim 13, **characterized in that** the linear polymer is an aliphatic and/or semicrystalline polyamide or copolyamide which is nylon-4,6, nylon-6, nylon-6,6, nylon-6,9, nylon-6,10, nylon-6,12, nylon-6,36, nylon-11, nylon-12, a semicrystalline semiaromatic polyamide, a copolyamide, or a polyphthalamides.

15. The article according to anyone of the preceding claims, wherein the matrix yarns and/or fibers further comprise additives, which are flame retardants, plasticizers, heat and light stabilizers, waxes, pigments, nucleating agents, antioxidants, or impact strength modifiers or analogous thereof.

16. The article according to anyone of the preceding claims, **characterized in that** the reinforcing yarns and/or fibers are carbon, glass, aramid, polyimide yarns or fibers.

17. The article according to anyone of claims 1 to 15, **characterized in that** the reinforcing yarns and/or fibers are natural yarns, fibers, sisal, hemp or flax yarns.

18. The article according to anyone of the preceding claims, **characterized in that** it further comprises a matrix precursor powder material.

19. The article according to the preceding claim, **characterized in that** said matrix precursor powder material is a polyamide.

20. The article according to anyone of the preceding claims, **characterized in that** it is under the form of continuous or chopped yarns, tapes, mats, braids, wovens, knits, webs, multiaxial fabrics, or nonwovens and/or complex forms comprising several of the preceding forms.

21. A composite material, **characterized in that** it is obtained from an article according to anyone of the preceding claims, by at least partial melting of the matrix yarns and/or fibers.

22. The composite material according to the preceding claim, having a reinforcement content of between 25 and 80 percent by weight.

23. Semi-finished product **characterized in that** it is obtained by a thermoforming or calendaring process to the final shape of the article according to anyone of claims 1 to 22, during which the matrix yarns and/or fibers are at least partially molten so as to impregnate the reinforcing yarns and/or fibers.

24. Semi-finished product according to claim 23, **characterized in that** it is under the form of plaques or tapes.

25. Finished product, **characterized in that** it is obtained by thermoforming to the final shape of the article according to anyone of claims 1 to 22, during which the yarn and/or fibers are at least partially molten for impregnating the reinforcing yarn and/or fibers.

26. Finished product, **characterized in that** is obtained by a forming or thermocompression process to the final shape of the semi-finished product according to anyone of claims 23 or 24.
